# EUROPEAN PATENT APPLICATION

(11) **EP 1 433 990 A1**
(43) Date of publication of application: **30.06.2004**
(21) Application number: 03029626.3
(22) Date of filing: 22.12.2003
(51) Int. Cl.: F16L 11/20, F16L 39/02, F16L 39/00

(54) **Flexible hose**

(30) Priority: 26.12.2002 JP 2002378667; 26.12.2002 JP 2002378669
(71) Applicant: Calsonic Kansei Corporation, Tokyo 164-8602 (JP)
(72) Inventor: Ichimura, Nobuo, Tokyo 164-8602 (JP); Takasaki, Hiromi, Tokyo 164-8602 (JP); Takamatsu, Yoshikazu, Tokyo 164-8602 (JP)
(74) Representative: Grünecker, Kinkeldey, Stockmair & Schwanhäusser Anwaltssozietät

(57) **Abstract**

A flexible hose (1) for use as a refrigerant passageway in a vehicular refrigerating cycle has an inner hose (20) and an outer hose (10). The outer hose (10) covers the inner hose (20) with a space formed in a given distance. The outer hose (10) and the inner hose (20) are formed of resin having flexibility.
A method of mounting a coupling assembly (40,40a,40b,40c) on a distal end of the flexible hose (1) is also disclosed.

## Description

### BACKGROUND OF THE INVENTION

### 1. Field of the Invention

The present invention relates to a flexible hose for use as a refrigerant passageway in a vehicular refrigerating cycle.

### 2. Description of the Related Art

A flexible hose of the related art, for use as a refrigerant passageway in a vehicular refrigerating cycle, is disclosed in Japanese Patent No. 2595578.

The flexible hose of the related an takes the form of a double-layer conduit structure that is comprised of an outer hose and an inner hose. The outer hose and the inner hose are formed of rubber. Inside the outer hose, the inner hose is freely inserted to the outer hose at a position spaced from an inner surface thereof by a given distance. Coupling the outer hose to a compressor input of the refrigerating cycle allows a low pressure refrigerant passage to be established. Coupling the inner hose to a compressor output of the refrigerating cycle allows a high pressure refrigerant passage to be established. With such a structure, a contact area between the hose and the atmosphere decreases. Further, since the inner hose functions as a flow passage for high pressure fluid that leaks at a high leakage rate and the outer hose functions as a flow passage for low pressure fluid that leaks at a lower leakage rate than that of high pressure fluid, the flexible hose encounters less leakage in refrigerant that is leaked from a whole of the flexible hose to the outside thereof and less thermal diffusion in refrigerant that is diffused from a whole of the flexible hose to the outside thereof.

However, since the flexible hose of the related art takes the form of the double-layer conduit structure comprised of the outer hose and the inner hose both of which are made from rubber, the flexible hose encounters an increase in weight per one piece of hose. Further, although the above literature discloses a shape of a fitting formed on a distal end of the flexible hose, there is no disclosure for a method of mounting the fittings to the distal ends of the outer hose and the inner hose. Therefore, it was hard to mount the fittings to the distal ends of the outer hose and the inner hose under a condition where a central axis of the inner hose and a central axis of the outer hose are held in coincidence with respect to one another.

### SUMMARY OF THE INVENTlON

It is therefore an object of the present invention to provide a flexible hose configured in the form of a double-layer structure that is decreased in weight per one piece of hose and has a coupling assembly enabled to align a central axis of an inner hose to a central axis of an outer hose.

To achieve the above object, the present invention provides a flexible hose for use as a refrigerant passageway in a vehicular refrigerating cycle, comprising an inner hose, and an outer hose covering the inner hose with a space in a given distance, wherein at least one of the outer hose and the inner hose is formed from resin having a flexibility.

According to the present invention, at least one of the outer hose and the inner hose is formed from resin having the flexibility. Since resin has a lower specific gravity than rubber, reduction in weight of the flexible hose can be realized.

In a preferred embodiment of the present invention, the flexible hose is further comprised of a coupling assembly which includes a sleeve-like inner conduit coupling including an inside connecting portion adapted to be coupled to an associated inside connecting portion, a plurality of retainer segments extending in a radial direction thereof and an inner hose fixing portion fixedly retained by a distal end of the inner hose, and a sleeve-like outer conduit coupling including an outside connecting portion adapted to be coupled to an associated outside connecting portion, a retainer fixing portion that fixedly retains the retainer segments of the inner conduit coupling, and an outer hose fixing portion fixedly retained by a distal end of the outer hose, with the outer conduit coupling having an inner diameter slightly larger than an outer diameter of the retainer segments of the inner conduit coupling, wherein caulking an outer circumferential periphery of the retainer fixing portion after inserting the inner conduit coupling, fixedly retained with the distal end of the inner hose, into an interior of the outer conduit coupling fixedly retained with the distal end of the outer hose allows the retainer segments to be fixedly retained with the retainer fixing portion.

According to this embodiment, inserting the inner conduit coupling fixedly retained by the distal end of the inner hose into the interior of the outer conduit coupling fixedly retained by the distal end of the outer hose and subsequently caulking the outer circumferential periphery of the retainer fixing section allows the retainer segments to be fixedly retained by the retainer fixing portion. Accordingly, it is possible to easily obtain the flexible hose with the distal end mounted with the coupling assembly wherein the central axis of the inner hose is aligned with the central axis of the outer hose.

### BRIEF DESCRIPTION OF THE DRAWINGS

FIG. 1 is a perspective view of a flexible hose of a first embodiment according to the present invention.
FIG. 2 is a cross sectional view, taken along an axial direction, of a flexible hose of a second embodiment of the present invention, with an inner hose being shown to be inserted to an outer hose.
FIG. 3 is a cross sectional view, taken along an axial direction, of the flexible hose of the second embodiment of the present invention, with the inner hose being shown to be coupled to the outer hose.
FIG. 4 is a cross sectional view of a distal end face of the flexible hose of the second embodiment according to the present invention.
FIG 5 is a perspective view showing a modified form of a coupling assembly forming part of the flexible hose of the second embodiment of the present invention.
FIG. 6 is a perspective view showing another modified form of the coupling assembly forming part of the flexible hose of the second embodiment of the present invention.
FIG 7 is a cross sectional view, taken along an axial direction, of a flexible hose of a third embodiment of the present invention, with an outer hose being shown to be coupled to an inner hose.

### DETAILED DESCRIPTION OF THE PREFERRED EMBODIMENTS

With reference to a first embodiment, a flexible hose according to the present invention is described. With reference to second and third embodiments, description is made of coupling assemblies mounted to distal ends of the flexible hoses according to the present invention.

### (First Embodiment)

A flexible hose 1 is used for a circulation path for refrigerant adapted to be circulated through a refrigerating cycle such as a vehicular air conditioning device and a vehicular refrigerating unit.

A vehicular air conditioning device has component elements, such as a compressor, a condenser and an evaporator, that are located in a vehicle in a manner described below. The compressor is mounted in an engine side and compresses refrigerant under a high temperature and high pressure. The condenser is located in a vehicle side and cools high pressure refrigerant. The evaporator is located in the vehicle side and allow refrigerant to be expanded to remove heat from the surrounding. Accordingly, the compressor is subjected to vibrations of an engine during start-up and operation thereof and is apt to vibrate in a mode differing from that of vibration of a vehicle body. If the compressor and the condenser, and/or the compressor and the evaporator are coupled to one another using a hard pipe as a path to permit refrigerant to be circulated, both distal ends of the pipe are subjected to different vibration modes, resulting in damage of the hard pipe. In consideration of such an issue, the flexible hose 1 has flexibility. The flexibility of the flexible hose 1 provides an ease of assembling work during fitting-out of the vehicle.

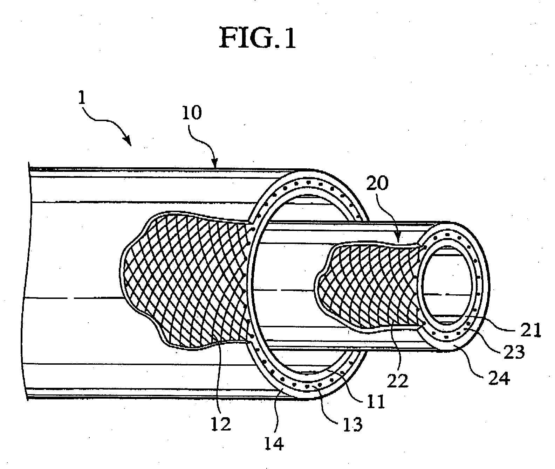

As shown in FIG 1, the flexible hose 1 includes an outer hose 10 and an inner hose 20. Inserting the inner hose 20 into the interior of the outer hose 10 in a position spaced from an inner surface of the outer hose 10 by a given distance allows the flexible hose 1 to take a double-layer conduit structure.

The outer hose 10 takes the form of a three-layer structure that is comprised of a base layer 11, a reinforcing layer 13 and a protecting layer 14 concentrically laminated in this order. The inner hose 20 takes the form of a three-layer structure that is comprised of a base layer 21, a reinforcing layer 23 and a protecting layer 24 concentrically laminated in this order. The outer hose 10 and the inner hose 20 have flexibilities, respectively. Also, the outer hose 10 has a higher flexibility than the inner hose 20. The flexible hose 1 is laid inside the vehicle such that high pressure refrigerant passes through the interior of the inner hose 20 and low pressure refrigerant passes through a space defined between the inner hose 20 and the outer hose 10.

The base layer 11 of the outer hose 10 is made from rubber raw material such as butyl rubber and formed in a substantially conduit profile. The reinforcing layer 13 is formed by winding a reinforcing yarn 12, made of raw material of polyester system, onto an outer circumferential periphery of the base layer 11. The protecting layer 14 is formed by covering an outer circumferential periphery of the reinforcing layer 13 with rubber raw material such as butyl rubber and EPDM rubber.

The base layer 21 of the inner hose 20 is made from resin raw material such as nylon and formed in a substantially conduit profile. The reinforcing layer 23 is formed by winding a reinforcing yarn 22, made of raw material of polyester system, onto an outer circumferential periphery of the base layer 21. The protecting layer 24 is formed by covering an outer circumferential periphery of the reinforcing layer 23 with resin raw material such as polyurethane.

The flexible hose thus constructed has advantageous features described below.

Since the inner hose includes the base layer and the protecting layer formed from resin having the flexibility and a small specific gravity, the flexible hose can be realized in a light weight.

Since the outer hose includes the base layer and the protecting layer formed from rubber raw material softer than resin raw material used for the inner hose, the flexible hose has an improved bending property and an improved laying-out capability. Therefore, in case of bending the flexible hose, it becomes possible to preclude only the inner hose, accommodated inside the outer hose, from being bent.

Due to the presence of the inner hose having the reinforcing layer formed by winding the reinforcing yarn onto the outer circumferential periphery of the base layer, the inner hose has an improved pressure tightness without causing the flexibility of the inner hose from being sacrificed. Also, due to the formation of a heat insulating layer formed by air trapped in a fabric of the reinforcing yarn, the amount of heat exchange between refrigerant inside the inner hose and refrigerant inside the outer hose decreases, providing a capability of precluding a refrigerating cycle from being deteriorated in performance.

Since the inner hose includes the protecting layer at the outer circumferential periphery of the reinforcing layer, flow resistance of refrigerant between the outer hose and the inner hose can be reduced.

Due to an ability of permitting high pressure refrigerant to flow through the inner hose and low pressure refrigerant to flow through the space between the inner hose and the outer hose, the high pressure refrigerant flows through a narrow cross sectional area. Consequently, it becomes possible for the amount of refrigerant to be filled in the refrigerating cycle at a minimum.

Also, as an alternative of the inner hose, the base layer of the inner hose may be further formed in a two-layer structure (composed of an innermost layer and a resin layer). The innermost layer is formed of a nylon film with a thickness in the order of approximately 100 µm. The resin layer is formed by covering an outer circumferential periphery of the innermost layer with urethane. In addition, formed on the outer circumferential periphery of the resin layer are the reinforcing layer and the protecting layer laminated in this order. Comparing the base layer formed in the two-layer structure to the base layer formed in a single resin layer, the base layer formed in the two-layer structure has a high flexibility and, due to the presence of the resin layer and the reinforcing layer adjacent to one another, adhesiveness is improved, resulting in a stabilized strength quality.

### (Second Embodiment)

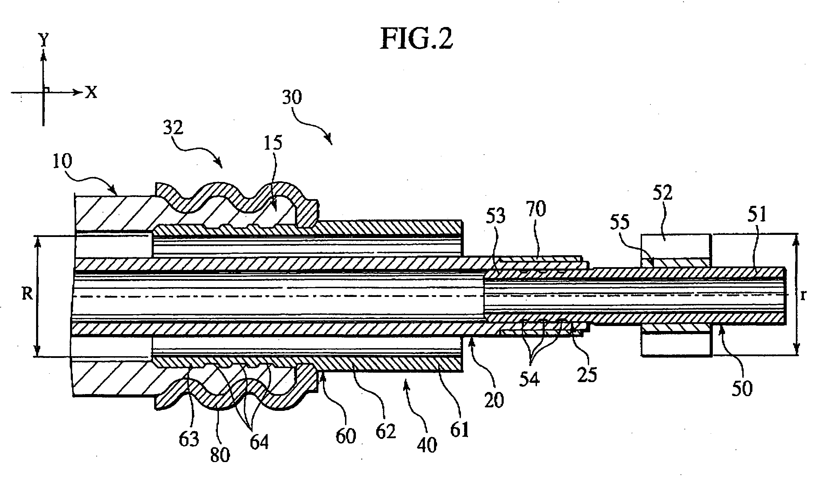

As shown in FIG. 2, a flexible hose 30 is comprised of the outer hose 10, the inner hose 20 and a coupling assembly 40. The inner hose 20 is inserted through the interior of the outer hose 10. The coupling assembly 40 is mounted to a distal end 32 of the flexible hose 30. The coupling assembly 40 is comprised of an inner conduit coupling 50 and an outer conduit coupling 60.

The inner conduit coupling 50 has a concentric shape with the inner hose 20 and includes an inside connecting portion 51, retainer segments 52 and an inside hose fixing portion 53. The inside connecting portion 51 is integrally formed with the inner conduit coupling 50 and adapted to be coupled to an associated inside connecting portion (not shown) of a receiver opening that receives the distal end 32 of the flexible hose 30. A plurality of retainer segments 52 are located on an outer circumferential periphery of a central area 55 of the inner conduit coupling 50. The inside hose fixing portion 53 is integrally formed with the inner conduit coupling 50 and fixedly retained by a distal end 25 of the inner hose 20.

The outer conduit coupling 60 is formed in a concentric shape with the outer hose 10 and includes an outside connecting portion 61, a retainer fixing portion 62 and an outside hose fixing portion 63. An inner diameter R of the outer conduit coupling 50 is slightly larger than an outer diameter r of the retainer segments 52. The outside connecting portion 61 is integrally formed with the outer conduit coupling 60 and is adapted to be coupled to an associated outside connecting portion (not shown) of the receiver opening that receives the distal end 32 of the flexible hose 30. The retainer fixing portion 62 is integrally formed with the outer conduit coupling 60 and fixedly retains the retainer segments 52 of the inner conduit coupling 50. The outside hose fixing portion 63 is integrally formed with the outer conduit coupling 60 and fixedly retained by a distal end 15 of the outer hose 10.

The inside connecting portion 51 and the outside connecting portion 61 have circumferential peripheries formed with recesses, respectively, in which sealing O-rings (not shown) are mounted. This allows the inside connecting portion 51 and the outside connecting portion 61 to be tightly coupled to the associated inside connecting portion and the associated outside connecting portion, respectively.

By caulking an inner collar 70, formed on the distal end 25 of the inner hose 20, after inserting the inside hose fixing portion 53 of the inner conduit coupling 50 into the distal end 25 of the inner hose 20, the inside hose fixing portion 53 is fixedly retained by the inner hose 20. Also, formed on an outer circumferential periphery of the inside hose fixing portion 53 in a circumferential direction and axially spaced along an axial direction are a plurality of recessed portions 54. When caulking the inner collar 70 and fixedly retaining the inside hose fixing portion 53 with the inner hose 20, an inner surface of the distal end 25 of the inner hose 20 bites into the interiors of the recessed portions 54. Thus, the inner conduit coupling 50 becomes hard to fall out from the inner hose 20.

By caulking an outer collar 80, disposed on the distal end 15 of the outer hose 10 after inserting the outside hose fixing portion 63 of the outer conduit coupling 60 into the distal end 15 of the outer hose 10, the outside hose fixing portion 63 is fixedly retained by the outer hose 10. Also, formed on an outer circumferential periphery of the outside hose fixing portion 63 in a circumferential direction and axially spaced along an axial direction are a plurality of recessed portions 64. When caulking the outer collar 80 and fixedly retaining the outside hose fixing portion 63 with the outer hose 11, an inner surface of the distal end 15 of the outer hose 10 bites into the interiors of the recessed portions 64. Thus, the outer conduit coupling 60 becomes hard to fall out from the outer hose 10.

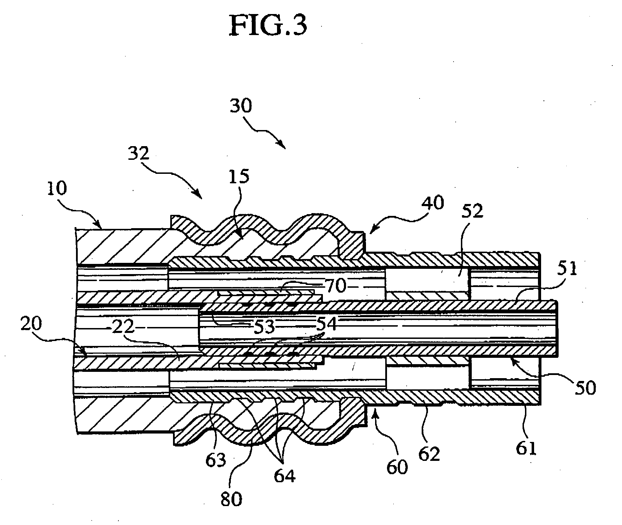

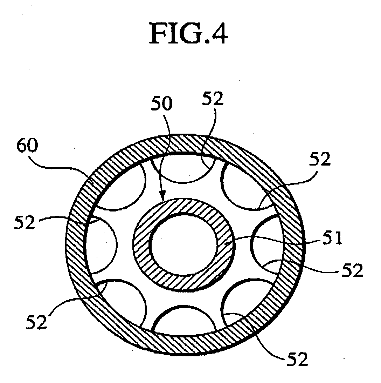

The coupling assembly 40 is assembled in a manner described below. The inner hose 20, in which the inner conduit coupling 50 is caulked and retained, is inserted to the outer hose 10, in which the outer conduit coupling 60 is caulked and retained, until the retainer segment 52 is positioned in the retainer fixing portion 62. Then, caulking the outer circumferential periphery of the retainer fixing portion 62 allows the retainer segments 52 to be fixedly retained by the retainer fixing portion 62. In such a manner, the coupling assembly 40 of the flexible hose 30 is completed (see FIGS. 3 and 4).

Also, although the presently filed embodiment has been described with reference to an exemplary case that employs a method of caulking the inner collar 70 to allow the distal end 25 of the inner hose 20 to fixedly retain the inside hose fixing portion 53 and a method of caulking the outer collar 80 to allow the distal end 15 of the outer hose 10 to fixedly retain the outside hose fixing portion 63, the present invention is not limited to such an exemplary case, and it may be possible to use a hand clamp to allow the inside hose fixing portion 53 to be fixedly retained with the inner hose 20 while permitting the outside hose fixing portion 63 to be fixedly retained with the outer hose 10.

The flexible hose 30 thus constructed in such a way has advantageous features described below. Since the retainer segment 52 with a concentric profile with the inner hose 20 is fixedly retained with the retainer fixing portion 62 with a concentric profile with the outer hose 10, it is possible to provide a flexible hose coincident in a central axis of the inner hose and a central axis of the outer hose.

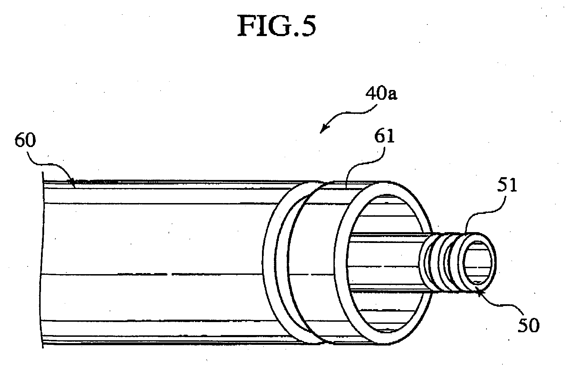

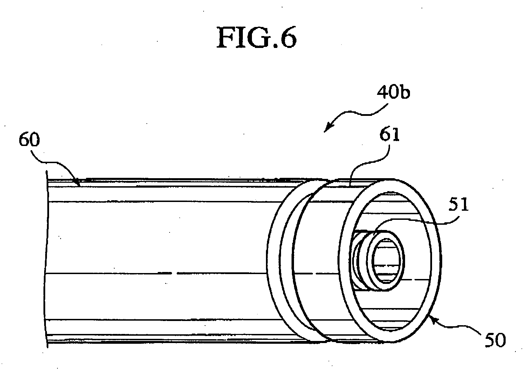

As an alternative of the presently filed embodiment, instead of the coupling assembly 40, the flexible hose 30 may include coupling assemblies 40a, 40b such as those shown in FIGS. 5 and 6. The coupling assembly 40 is configured such that the distal end of the inside connecting portion 51 of the inner conduit coupling 50 slightly protrudes from a distal end face of the outside connecting portion 61 of the outer conduit coupling 60. On the contrary, the coupling assembly 40a is configured such that a whole of the inside connecting portion 51 protrudes from a distal end face of an outside connecting portion 61a (see FIG 5). This provides an ease of connecting work for the coupling assembly 40a and an associated connecting member.

Further, the coupling assembly 40b is formed such that a distal end face of an inside connecting portion 51 and a distal end face of an outside connecting portion 61 are brought into coincidence with respect to one another (see FIG 6). This allows a total length of the coupling assembly 40b to be shortened, providing a capability for the flexible hose 30 to be laid in a position with less spatial margin.

### (Third Embodiment)

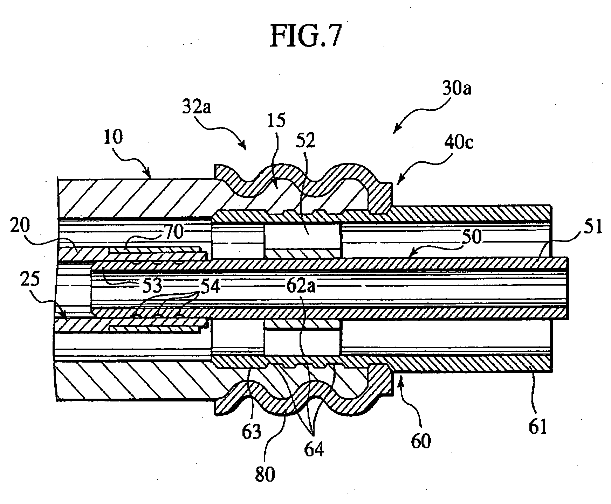

As shown in FIG 7, a flexible hose 30a includes the outer hose 10, the inner hose 20 and a coupling assembly 40c. The inner hose 20 is inserted to the interior of the outer hose 10. The coupling assembly 40c is mounted to a distal end 32a of the flexible hose 30a. The coupling assembly 40c is comprised of the inner conduit coupling 50 and the outer conduit coupling 60.

A retainer fixing portion 62a of the flexible hose 30a is located in a position closer to the outside hose fixing portion 63 of the outer conduit coupling 60 than the retainer fixing portion 62 of the flexible hose 30. More particularly, a plurality of recessed portions 64 are formed on an outer circumferential periphery of the retainer fixing portion 62a and when permitting the outer conduit coupling 60 to be fixedly retained with the outer hose 10, the recessed portions 64 of the retainer fixing portions 62a are opposed to the outer collar 80 mounted to the outer circumferential periphery of the outer hose 10.

The coupling assembly 40c is assembled in a manner described below. The outside hose fixing portion 63 of the outer conduit coupling 60 is inserted to the interior of the outer hose 10, and the inner hose 20, by which the inner conduit coupling 50 is caulked and fixedly retained, is inserted to the outer hose 10 such that the retainer segments 52 are positioned inside the retainer fixing portion 62a. Then, the outer circumferential periphery of the outer collar 80 is caulked and the inner surface of the distal end 15 of the outer hose 10 bites into the recessed portions 64 while the retainer segment 52 is fixedly retained with the interior of the retainer fixing portion 62a. This allows the outer hose 10 and the outer conduit coupling 60, and the outer conduit coupling 60 and the inner conduit coupling 50 are mutually coupled to one another, thereby completing assembling work for the coupling assembly 40c (see FIG 7).

Also, although the presently filed embodiment has been described with reference to an exemplary case that employs a method of caulking the inner collar 70 to allow the distal end 25 of the inner hose 20 to fixedly retain the inside hose fixing portion 53 of the inner hose 20 and a method of caulking the outer collar 80 to allow the distal end 15 of the outer hose 10 to fixedly retain the outside hose fixing portion 63 of the outer hose 10, the present invention is not limited to such an exemplary case, and it may be possible to use a hand clamp to allow the inside hose fixing portion 53 to be fixedly retained with the inner hose 20 while permitting the outside hose fixing portion 63 to be fixedly retained with the outer hose 10.

The flexible hose 30a thus constructed in such a way has advantageous features described below. Since the retainer segment 52 with a concentric profile with the inner hose 20 is fixedly retained with the retainer fixing portion 62a with a concentric profile with the outer hose 10, it is possible to provide a flexible hose coincident in a central axis of the inner hose and a central axis of the outer hose.

Further, caulking the outer collar of the outer hose allows the outside hose fixing portion of the outer conduit coupling to be fixedly retained with the outer hose and the retainer segment of the inner conduit coupling to be fixedly retained with the retainer fixing portion of the outer conduit coupling at the same time, enabling reduction in the number of steps for assembling the coupling assembly.

## Claims

1. A flexible hose (1, 30, 30a) for use as a refrigerant passageway in a vehicular refrigerating cycle, comprising:
an inner hose (20); and
an outer hose (10) covering the inner hose (20) with a space in a given distance;
wherein at least one of the outer hose (10) and the inner hose (20) is formed from resin having a flexibility.

2. The flexible hose (1, 30, 30a) according to claim 1, wherein the outer hose (10) is formed from raw material having a higher flexibility than that of raw material forming the inner hose (20).

3. The flexible hose (30, 30a) according to claim 1, further comprising a coupling assembly (40, 40a, 40b, 40c) which includes:
an inner sleeve-like conduit coupling (50) including an inside connecting portion (51) adapted to be coupled to an associated inside connecting portion, a plurality of retainer segments (52) extending in a radial direction thereof, and an inside hose fixing portion (53) fixedly retained by a distal end (25) of the inner hose (20); and
an outer sleeve-like conduit coupling (60) including an outside connecting portion (61) adapted to be coupled to an associated outside connecting portion, a retainer fixing portion (62, 62a) fixedly retaining the retainer segments (52) of the inner sleeve-like conduit coupling (50), and an outside hose fixing portion (63) fixedly retained by a distal end (15) of the outer hose (10),
the outer conduit coupling (60) having an inner diameter (R) slightly larger than an outer diameter (r) of the retainer segments (52) of the inner conduit coupling (50);
wherein caulking an outer circumferential periphery of the retainer fixing portion (62, 62a) after inserting the inner conduit coupling (50), fixedly retained with the distal end (25) of the inner hose (20), into an interior of the outer conduit coupling (60) fixedly retained with the distal end (15) of the outer hose (10) allows the retainer segments (52) to be fixedly retained with the retainer fixing portion (62, 62a).

4. The flexible hose (30a) according to claim 3, wherein the retainer fixing portion (62a) is disposed in the outside hose fixing portion (63) and caulking an outer circumferential periphery of the outside hose fixing portion (63) allows the retainer segments (52) to be fixedly retained with the retainer fixing portion (62a).

5. The flexible hose (1, 30, 30a) according to claim 1, wherein at least one of the outer hose (10) and the inner hose (20) takes the form of a double-layer structure that includes a base layer (11, 21) formed in a substantially conduit shape, and a reinforcing layer (13, 23) formed by winding a reinforcing yarn onto an outer circumferential periphery of the base layer (11, 21).

6. The flexible hose (30, 30a) according to claim 5, further comprising a coupling assembly (40, 40a, 40b, 40c) which includes:
an inner sleeve-like conduit coupling (50) including an inside connecting portion (51) adapted to be coupled to an associated inside connecting portion, a plurality of retainer segments (52) extending in a radial direction thereof, and an inside hose fixing portion (53) fixedly retained by a distal end (25) of the inner hose (20); and
an outer sleeve-like conduit coupling (60) including an outside connecting portion (61) adapted to be coupled to an associated outside connecting portion, a retainer fixing portion (62, 62a) fixedly retaining the retainer segments (52) of the inner sleeve-like conduit coupling (50), and an outside hose fixing portion (63) fixedly retained by a distal end (15) of the outer hose (10),
the outer conduit coupling (60) having an inner diameter (R) slightly larger than an outer diameter (r) of the retainer segments (52) of the inner conduit coupling (50);
wherein caulking an outer circumferential periphery of the retainer fixing portion (62, 62a) after inserting the inner conduit coupling (50), fixedly retained with the distal end (25) of the inner hose (20), into an interior of the outer conduit coupling (60) fixedly retained with the distal end (15) of the outer hose (10) allows the retainer segments (52) to be fixedly retained with the retainer fixing portion (62, 62a).

7. The flexible hose (1, 30, 30a) according to claim 1, wherein at least one of the outer hose (10) and the inner hose (20) takes the form of a three-layer structure that includes a base layer (11, 21) formed in a substantially conduit shape, a reinforcing layer (13, 23) formed by winding a reinforcing yam onto an outer circumferential periphery of the base layer (11, 21), and a protecting layer (14, 24) formed on an outer circumferential periphery of the reinforcing layer (13,23).

8. The flexible hose (30, 30a) according to claim 7, further comprising a coupling assembly (40, 40a, 40b, 40c) which includes:
an inner sleeve-like conduit coupling (50) including an inside connecting portion (51) adapted to be coupled to an associated inside connecting portion, a plurality of retainer segments (52) extending in a radial direction thereof, and an inside hose fixing portion (53) fixedly retained by a distal end (25) of the inner hose (20); and
an outer sleeve-like conduit coupling (60) including an outside connecting portion (61) adapted to be coupled to an associated outside connecting portion, a retainer fixing portion (62, 62a) fixedly retaining the retainer segments (52) of the inner sleeve-like conduit coupling (50), and an outside hose fixing portion (63) fixedly retained by a distal end (15) of the outer hose (10),
the outer conduit coupling (60) having an inner diameter (R) slightly larger than an outer diameter (r) of the retainer segments (52) of the inner conduit coupling (50);
wherein caulking an outer circumferential periphery of the retainer fixing portion (62, 62a) after inserting the inner conduit coupling (50), fixedly retained with the distal end (25) of the inner hose (20), into an interior of the outer conduit coupling (60) fixedly retained with the distal end (15) of the outer hose (10) allows the retainer segments (52) to be fixedly retained with the retainer fixing portion (62, 62a).

9. The flexible hose (1, 30, 30a) according to claim 1, wherein high pressure refrigerant flows through an interior of the inner hose (20), and low pressure refrigerant flows through a space between the inner hose (20) and the outer hose (10).
